# EUROPÄISCHE PATENTSCHRIFT

(11) **EP 2 159 089 B1**
(45) Veröffentlichungstag und Bekanntmachung des Hinweises auf die Patenterteilung: **02.11.2011**
(21) Anmeldenummer: 09009815.3
(22) Anmeldetag: 29.07.2009
(51) Int. Cl.: B60J 7/047, B60J 7/06

(54) **Personenkraftwagen mit einem verstellbaren Dach**
Vehicle with an adjustable roof
Véhicule doté d'un toit réglable

(30) Priorität: 01.08.2008 DE 102008036909
(43) Veröffentlichungstag der Anmeldung: 03.03.2010
(73) Patentinhaber: Magna Car Top Systems GmbH, 74321 Bietigheim-Bissingen (DE)
(72) Erfinder: Wolf, Philipp, Dipl.-Ing. (BA), 70191 Stuttgart (DE); Klein, Berthold, Dipl.-Ing. (FH), 74343 Sachsenheim (DE); Reichel, Johannes, Dipl.-Ing., 71254 Ditzingen (DE); Eisner, Michael, 70469 Stuttgart (DE)
(74) Vertreter: Völger, Silke Beatrix

(56) Entgegenhaltungen:
- EP-A- 1 031 448
- DE-A1- 19 845 734

## Beschreibung

Die Erfindung betrifft einen Personenkraftwagen mit einem verstellbaren Dach Ein solcher Personenkraftwagen ist z.B. aus der EP 1 031 448 A bekannt.

Es ist ein weiteres öffnungsfähiges Dach für ein Fahrzeug der Kategorie Personenkraftwagen bekannt, DE 102 15 966 B4, das mehrere in Fahrzeuglängsrichtung hintereinander angeordnete Lamellen aufweist. Die Lamellen sind in einer Dachöffnung vorgesehen, die sich entlang eines fließheckförmigen Verlaufs eines Dachs erstreckt, und zwar zwischen einem Windschutzscheibenrahmen und einer tief nach unten gezogenen Heckwand. Um einen Heckraum des Personenkraftwagens zu beladen, sind die Lammellen aus einer flächig aneinander liegenden Stellung in eine paketartig zusammen geschobene Stellung verstellbar.

Aus der DE 100 25 051 C1 geht ein Fahrzeug -Limousine oder Coupe- mit einem zu öffnenden Dach hervor. Das Dach setzt sich aus Deckelelementen und einer Heckscheibe zusammen, die in einer Dachöffnung angeordnet sind und zwischen einer Schließstellung sowie eine Offenstellung bewegbar sind. In der Offenstellung sind die Deckelelemente und die Heckscheibe so abgelegt, dass vom Fahrgastraum aus Vorgänge hinter dem Fahrzeug beobachtet werden können,

Die DE 807 474 befasst sich mit einem Faltschiebedach für Personenautos, das einen faltbaren Verdeckbezug und quer zur Fahrzeuglängsrichtung verlaufende Führungs- und Faltspriegel umfasst. Mittels den Führungs- und Faltspriegel wird der Verdeckbezug aus einer gestreckten Stellung in eine Faltstellung und umgekehrt betätigt.

Es ist Aufgabe der Erfindung bei einem verstellbaren Dach für einen Personenkraftwagen solche Vorkehrungen zu treffen, dass es bei einfacher Herstellung sich durch gute Funktion auszeichnet. Dabei sollte aber auch sichergestellt sein, dass die freie Sicht hinter den Personenkraftwagen aus seinem Fahrgastraum heraus in definierten Fahrbetriebssituationen z.B. Rückwärtsfahrt weitgehend uneingeschränkt ist.

Diese Aufgabe wird nach der Erfindung durch die Merkmale des Patentanspruchs 1, gelöst. Weitere, die Erfindung ausgestaltende Merkmale sind in den Unteransprüchen enthalten.

Die mit der Erfindung hauptsächlich erzielten Vorteile sind darin zu sehen, dass das bewegliche Dach mit seiner im rückwärtigen Bereich des Aufbaus angeordneten Dachelementeinrichtung musterhaft ausgeführt und funktionsfähig ist. Gerade die Anordnung der Dachelementeinrichtung in dem Steilheck des Aufbaus schafft günstige konstruktive Verhältnisse, die sich mit vertretbarem Aufwand umsetzen lassen. In diesem Zusammenhang sind die ersten, zweiten und dritten Dachelemente der Dachelementeinrichtung hervorzuheben, dank deren Zusammenwirken erreicht wird, dass zum einen in der Offenstellung der Dachelementeinrichtung eine optimierter Freigang der Dachöffnung erzielt wird und zum anderen zumindest das zweite Dachelement, weil aus Glas bestehend, in der Rückblickstellung den Durchblick vom Fahrgastraum aus hinter den Personenkraftwagen ermöglicht. Die Rückblickstellung des besagten Dachelements lässt sich dadurch funktionsgerecht bewerkstelligen, indem die Rückblickstellung in Abhängigkeit der Rückwärtsgangstellung einer Getriebeschalteinrichtung des Personenkraftwagens steuerbar ist.

In der Zeichnung wird ein Ausführungsbeispiel der Erfindung gezeigt, das nachstehend näher erläutert wird.

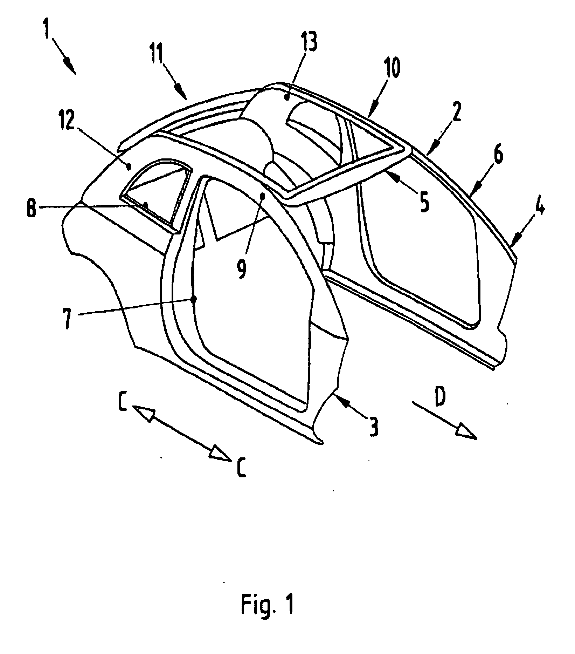

Es zeigen
Fig. 1 eine Schrägansicht von vorne rechts oben auf einen Aufbau eines Personenkraftwagens, und zwar ohne mechanische Aggregate -Triebwerk, Fahrwerk oder dgl.-,

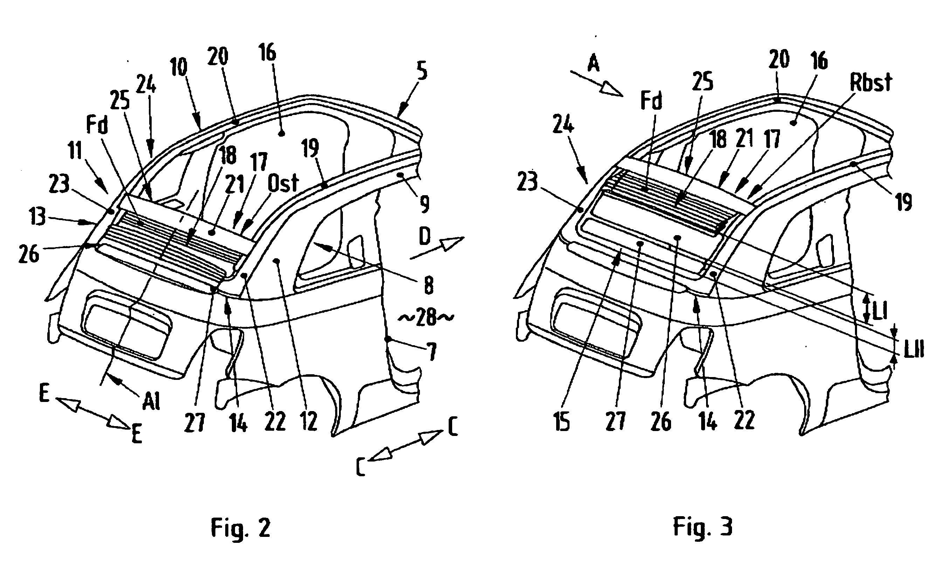

Fig. 2 eine Schrägansicht von hinten rechts oben auf den Aufbau des Personenkraftwagen mit dem beweglichen Dach nach der Erfindung,
Fig. 3 eine Ansicht entsprechend Fig. 2,
Fig. 4 eine schematische Seitenansicht in Pfeilrichtung A der Fig. 1 in größerem Maßstab,

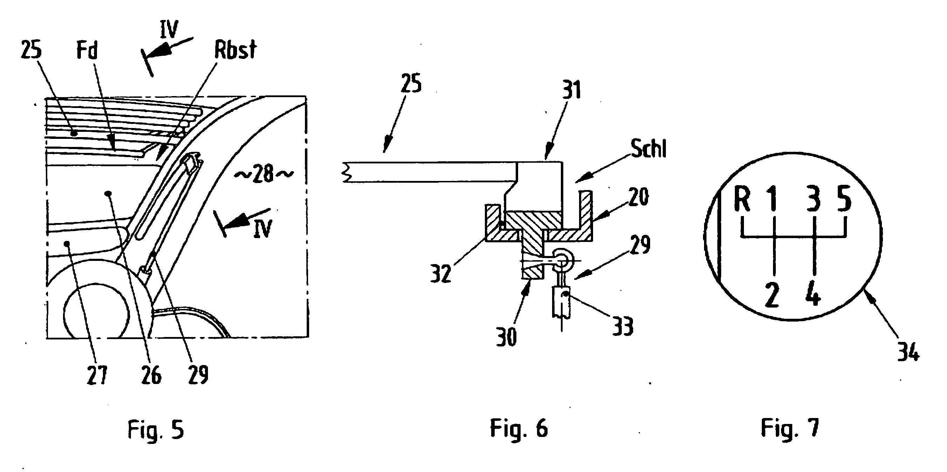

Fig. 5 eine Schrägansicht von rechts vorne ein den hinteren Bereich eines Fahrgastraums des Personenkraftwagens,
Fig. 6 einen Schnitt nach der Linie VI-VI der Fig. 5 in größerem Maßstab und teilweise im Schnitt.
Fig. 7 eine schematische Ansicht einer Getriebeschalteinrichtung des Personenkraftwagens.

Von einem Personenkraftwagen 1 ist lediglich ein Aufbau 2 mit gegenüberliegenden Seitenwänden 3 und 4 und einem oberen Querträger 5 eines Windschutzscheibenrahmens 6 dargestellt. Die je eine Türöffnung 7 und eine Fensteröffnung 8 aufweisenden Seitenwände 3 und 4, die aufrecht stehen und fest mit dem Aufbau 2 verbunden sind, umfassen Dachseitenrahmen 9 und 10 , die in einem rückwärtigen Bereich 11 des Aufbaus 2 in Säulen 12 und 13 übergehen und auf eine Gürtellinie 14 des besagten Aufbaus stoßen. Die Dachseitenrahmen 9 und 10, der vordere Querträger 5 und eine benachbart der Gürtellinie 14 verlaufendes Querteil 15 des Aufbaus 2 begrenzen eine relativ große Dachöffnung 16. In der ein bewegliches Dach 17 in Fahrzeuglängsrichtung C-C verschiebbar angeordnet ist.

Das Dach 17 ist nach Art eines Faltdachs Fd aufgebaut, wie bspw. in der US 3,658,378 und DE 807 474 beschrieben und zwischen einer Schließstellung und Offenstellung Ost und vice versa bewegbar. Neben mehreren Faltabschnitten 18, die Führungsspriegel und Faltspriegel -nicht gezeigt- besitzen und in Führungen 19 und 20 der Dachseitenholme 9 und 10 verstellbar sind, weist das Dach 17 eine Dachelementeinrichtung 21 auf, die in das vorgenannte Dach 17 integriert ist, und zwar in ein durch hintere Abschnitte 22 und 23 der Seitenwände 3 und 4 gebildetes Steilheck 24 des Aufbaus 2. Unter Steilheck wird in diesem Zusammenhang verstanden, wenn eine hintere Aufbaulinie Al, relativ aufrecht -ca. 90° bzw. > 90° bis ca. 135°- zur Fahrbahn verläuft.

Die Dachelementeinrichtung 21 umfasst entgegen der Fahrtrichtung D gesehen ein erstes Dachelement 25, ein zweites Dachelement 26 und ein drittes Dachelement 27, die zumindest teilweise im Steilheck 24 angeordnet und in den Führungen 19 und 20 gelagert sind. Das zweite Dachelement 26 und das dritte Dachelement 27 werden durch sich in Fahrzeugquerrichtung E-E und in Fahrzeuglängsrichtung C-C ausgerichtete flächige Dachbauteile gebildet. Darüber hinaus sind die Dachelemente 25, 26 und 27 zwischen der Offenstellung Ost und einer Rückblickstellung Rbst und umgekehrt verlagerbar. In der Offenstellung Ost liegen das zweite Dachelement 28 und das dritte Dachelement 27 geschichtet übereinander -Dachelement 27 befindet sich über Dachelement 27-, wobei die mit den Dachelementen 25, 28 und 27 direkt oder indirekt gekoppelten Faltabschnitte 18 zumindest teilweise oberhalb der zweiten und dritten Dachelemente 26 und 27 liegen.

In der Rückblickstellung Rbst hat der Fahrer des Personenkraftwagens 1 von einem Fahrgastraum 28 des Aufbaus 2 aus eine Durchblick hinter den besagten Personenkraftwagen 1 entweder direkt oder über einen nicht dargestellten Rückblickspiegel im Fahrgastraum. Hierzu sind die Dachelemente 26 und 27 -zumindest eines davoninsgesamt oder abschnittsweise aus durchscheinendem Werkstoff bspw. Glas hergestellt. Das zweite Dachelement 26 und das dritte Dachelemente 27 weisen in Fahrzeuglängsrichtung C-C betrachtet unterschiedliche Längen auf. So ist die Länge LI des zweiten Dachelements 26 größer als die Länge LII des dritten Dachelements 27. Denkbar ist aber auch beide Dachelemente 26 und 27 gleich lang auszuführen. Die Faltabschnitte 18 des Faltverdecks sind in der Rückblickstellung Rbst in der Weise abgelegt, dass sie den freien Durchblick durch das zweite Dachelement 26 nicht beeinträchtigen.

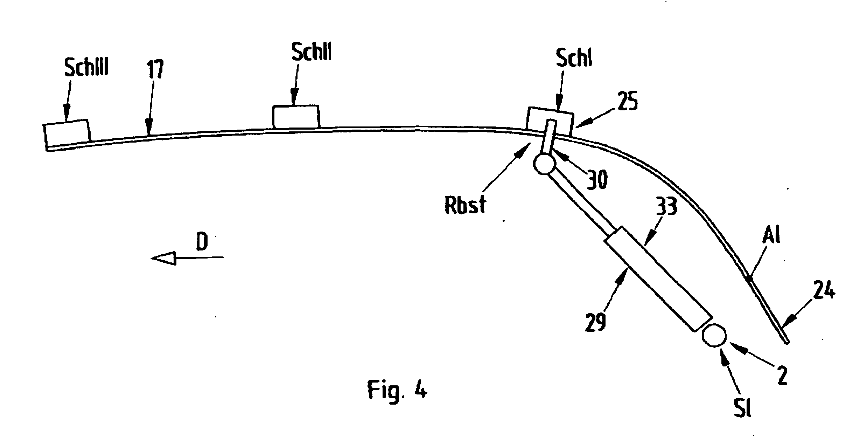

Gemäß Fig. 4 ist das erste Dachelement 25 mit einem ersten Schlitten Schl versehen, der mit der Führung 20 der Seltenwand 4 zusammenwirkt. Dem ersten Schlitten Schl -in Fahrrichtung D- vorgelagert ist ein zweiter Schlitten Schll und ein dritter Schlitten Schlll, die in der Führung 20 bewegbar sind. Der dritte Schlitten Schlll und der zweite Schlitten sind zum Öffnen des Dachs 17 entgegen der Fahrtrichtung D bewegbar, und zwar bis sie am ersten Schlitten Schl anschlagen, der zusammen mit dem ersten Dachelement 25 die Rückblickstellung Rbst einnimmt. Das erste Dachelement 25 bzw. ist gegen die Wirkung eines Abstützvorrichtung 29 in der Rückblickstellung Rbst festgelegt. Die Abstützvorrichtung 29 greift einerseits an einem Arm 30 des ersten Schlittens Schl an, der an einem Aufnahmekörper 31 des ersten Dachelements 25 angebracht ist. Der Arm 30 durchdringt eine Schlitzöffnung 32 in der Führung 20. Andererseits ist die Abstützvorrichtung 29 an einem Schwenklager SI des Aufbaus 2

Wird der erste Schlitten Schl des ersten Dachelements 25 mittels weitem Schlitten Schll und drittem Schlitten Schlll über die Rückblicksteltung Rbst hinaus in die Offenstellung Ost verbracht, so wird die Abstützvorrichtung 29 in Gestalt einer Kolben-Zylindereinheit 33 federartig gespannt und die zweiten und dritten Dachelement 26 und 27 werden übereinander gelegt. Um die Rückblickstellung Rbst einzustellen, wird die Kolben-Zylindereinheit 31, die eine Druckgasfeder oder eine Zuggasfeder sein kann, entspannt und die Dachelemente 26 und 27 nehmen besagte Rückblickstellung Rbst ein. Die Rückblickstellung Rbst kann in Abhängigkeit einer Rückwärtsgangstellung R einer Getriebeschalteinrichtung 34 des Personenkraftwagens 1 erfolgen, was durch ein definiertes Steuersignal der Getriebeschalteinrichtung 34 an einen Antriebsmechanismus -nicht dargestellt- des Dachs 17 erfolgen kann.

Schließlich decken in der Offenstellung Ost Faltabschnitte 18 des Faltverdecks Fd das zweite Dachelement 26 und das dritte Dachelement 27 ab. Dagegen liegen die Faltabschnitte 18 in der Rückblickstellung Rbst außerhalb des zweiten Dachelements 26 und des dritten Dachelements 27.

## Patentansprüche

1. Personenkraftwagen,
- mit einem verstellbaren Dach (17), das in eine Dachöffnung (16) eines Aufbaus (2) mit feststehenden Dachrahmen (9, 10) besitzenden Seitenwänden (3, 4) eingebaut und zwischen einer Schließstellung und einer Offenstellung (Ost) bewegbar ist,
- wobei das Dach (17) zumindest in einem rückwärtigen Bereich (11) des Aufbaus (2) mehrere in Führungen (19, 20) der Dachrahmen (9, 10) angeordnete zumindest teilweise flächig ausgebildete Dachelemente (25, 26, 27) aufweist,
- wobei eine durch Dachelemente (25, 26, 27) dargestellte Dachelementeinrichtung (21) zumindest bereichsweise in den ein Steilheck (24) bildenden Seitenwänden (3, 4) angeordnet ist,
- wobei die Dachelementeinrichtung (21) von einer Offenstellung (Ost) in eine Rückblickstellung (Rbst) bewegbar ist und vice versa,
- wobei wenigstens eines der Dachelemente (25, 26, 27) der Dachelementeinrichtung (21) zum Durchblick hinter den Personenkraftwagen (1) über einen Fahrgastraum (28) aus durchscheinendem Werkstoff, vorzugsweise Glas, besteht, und
- wobei das verstellbare Dach (17) bereichsweise als mit der Dachelementeinrichtung (21) zusammenwirkendes Faltdach (Fd) mit Verdeckbezug, Führungsspriegeln und Faltspriegeln ausgeführt ist.

2. Personenkraftwagen nach Anspruch 1, **dadurch gekennzeichnet, dass** die Dachelementeinrichtung (21) entgegen der Fahrtrichtung (D) gesehen ein erstes Dachelement (25) ein zweites Dachelement (26) und ein drittes Dachelement (27) umfasst.

3. Personenkraftwagen nach Anspruch 2, **dadurch gekennzeichnet, dass** wenigstens eines von den zweiten und dritten Dachelementen (26 und 27) der Dachelementeinrichtung (21) zumindest bereichsweise aus Glas bestehen.

4. Personenkraftwagen nach Anspruch 3, **dadurch gekennzeichnet, dass** das zweite Dachelement (26) und das dritte Dachelement (27) aus Glas bestehen.

5. Personenkraftwagen nach einem oder mehreren der Ansprüche 2 bis 4, **dadurch gekennzeichnet, dass** in Fahrzeuglängsrichtung (C-C) betrachtet das zweite und das dritte Dachelement (26 und 27) in etwa gleiche Längen aufweisen.

6. Personenkraftwagen nach einem oder mehreren der Ansprüche 2 bis 4, **dadurch gekennzeichnet, dass** in Fahrzeuglängsrichtung (C-C) betrachtet das zweite Dachelement (26) und das dritte Dachelement (27) unterschiedliche Längen (LI ≠ LII) aufweisen.

7. Personenkraftwagen nach Anspruch 6, **dadurch gekennzeichnet, dass** eine erste Länge (LI) des zweiten Dachelements (26) größer ist als eine zweite Länge (LII) des dritten Dachelements (27).

8. Personenkraftwagen nach Anspruch 2, **dadurch gekennzeichnet, dass** das erste Dachelement (25) der Dachelementeinrichtung (21) in der Rückblickstellung (Rbst) gegen die Wirkung einer Abstützvorrichtung (29) festgesetzt ist.

9. Personenkraftwagen nach Anspruch 8, **dadurch gekennzeichnet, dass** die Abstützvorrichtung durch eine Kolben-Zylindereinheit (33) gebildet wird.

10. Personenkraftwagen nach Anspruch 9, **dadurch gekennzeichnet, dass** die Kolben-Zylindereinheit (33) durch eine Druckgasfeder, Zugasfeder oder dgl. gebildet wird.

11. Personenkraftwagen nach Anspruch 2, **dadurch gekennzeichnet, dass** in der Offenstellung (Ost) das Faltdach (Fd) mit einzelnen Faltabschnitten (18) zumindest abschnittsweise das zweite Dachelement (26) und das dritte Dachelement (27) abdeckt, wogegen die besagten Faltabschnitte des Faltdachs (Fd) in der Rückblickstellung (Rbst) außerhalb des zweiten und des dritten Dachelements (26 und 27) liegen.

12. Personenkraftwagen nach Anspruch 1, **dadurch gekennzeichnet, dass** die Rückblickstellung (Rbst) der Dachelementeinrichtung (21) in Abhängigkeit einer Rückwärtsgangstellung (R) einer Getriebeschalteinrichtung (34) des Personenkraftwagens (1) steuerbar ist.

13. Personenkraftwagen nach einem der Ansprüche 1 bis 11, **dadurch gekennzeichnet, dass** die Rückblickstellung (Rbst) der Dachelementeinrichtung (21) in Abhängigkeit einer Rückwärtsgangstellung (R) einer Getriebeschalteinrichtung (34) des Personenkraftwagens (1) gesteuert ist, derart, dass bei eingestellter Offenstellung der Dachelementeinrichtung (21) das Einlegen des Rückwärtsgangs automatisch das Verstellen der Dachelementeinrichtung (21) in deren Rückblickstellung (Rbst) ansteuert.

14. Personenkraftwagen nach Anspruch 8, **dadurch gekennzeichnet, dass** das nach Art eines Spriegels ausgeführte erste Dachelement (25) an jedem Ende einen Aufnahmekörper (31) für die Abstützvorrichtung (29) umfasst.

15. Personenkraftwagen nach Anspruch 14, **dadurch gekennzeichnet, dass** der Aufnahmekörper (31) mit einem eine Führung (20) durchdringenden Arm (30) versehen ist, an dem die Abstützvorrichtung (29) angreift.

## Claims

1. Passenger vehicle,
- with an adjustable roof (17) which is installed in a roof opening (16) in a body (2) with fixed side walls (3, 4) having roof frames (9, 10) and is movable between a closed position and an open position (Ost),
- wherein the roof (17) has, at least in a rear region (11) of the body (2), a plurality of roof elements (25, 26, 27) which are arranged in guides (19, 20) of the roof frames (9, 10) and are of at least partially planar design,
- wherein a roof element device (21) represented by roof elements (25, 26, 27) is arranged at least in regions in the side walls (3, 4) which form a hatchback (24),
- wherein the roof element device (21) is movable from an open position (Ost) into a rear view position (Rbst) and vice versa,
- wherein at least one of the roof elements (25, 26, 27) of the roof element device (21) consists of transparent material, preferably glass, for viewing behind the passenger vehicle (1) via a passenger compartment (28), and
- wherein the adjustable roof (17) is designed in regions as a folding roof (Fd) which interacts with the roof element device (21) and has a folding-top cloth, guide bows and folding bows.

2. Passenger vehicle according to Claim 1, **characterized in that** the roof element device (21) comprises a first roof element (25), a second roof element (26) and a third roof element (27), as seen counter to the direction of travel (D).

3. Passenger vehicle according to Claim 2, **characterized in that** at least one of the second and third roof elements (26 and 27) of the roof element device (21) consists at least in regions of glass.

4. Passenger vehicle according to Claim 3, **characterized in that** the second roof element (26) and the third roof element (27) consist of glass.

5. Passenger vehicle according to one or more of Claims 2 to 4, **characterized in that** the second and the third roof elements (26 and 27) have approximately identical lengths, as viewed in the longitudinal direction (C-C) of the vehicle.

6. Passenger vehicle according to one or more of Claims 2 to 4, **characterized in that** the second roof element (26) and the third roof element (27) have different lengths (LI ≠ LII), as viewed in the longitudinal direction (C-C) of the vehicle.

7. Passenger vehicle according to Claim 6, **characterized in that** a first length (LI) of the second roof element (26) is greater than a second length (LII) of the third roof element (27).

8. Passenger vehicle according to Claim 2, **characterized in that** the first roof element (25) of the roof element device (21) is fixed in the rear view position (Rbst) counter to the effect of a supporting device (29).

9. Passenger vehicle according to Claim 8, **characterized in that** the supporting device is formed by a piston-cylinder unit (33).

10. Passenger vehicle according to Claim 9, **characterized in that** the piston-cylinder unit (33) is formed by a gas-filled compression spring, gas-filled tension spring or the like.

11. Passenger vehicle according to Claim 2, **characterized in that**, in the open position (Ost), the folding roof (Fd) covers at least sections of the second roof element (26) and the third roof element (27) by means of individual folding sections (18), whereas said folding sections of the folding roof (Fd) are located outside the second and the third roof elements (26 and 27) in the rear view position (Rbst).

12. Passenger vehicle according to Claim 1, **characterized in that** the rear view position (Rbst) of the roof element device (21) is controllable in dependence on a reverse gear position (R) of a gear-changing device (34) of the passenger vehicle (1).

13. Passenger vehicle according to one of Claims 1 to 11, **characterized in that** the rear view position (Rbst) of the roof element device (21) is controlled in dependence on a reverse gear position (R) of a gear-changing device (34) of the passenger vehicle (1) in such a manner that, when the open position of the roof element device (21) is set, the engagement of the reverse gear automatically activates the adjustment of the roof element device (21) into the rear view position (Rbst) thereof.

14. Passenger vehicle according to Claim 8, **characterized in that** each end of the first roof element (25), which is designed in the manner of a bow, comprises a receiving body (31) for the supporting device (29).

15. Passenger vehicle according to Claim 14, **characterized in that** the receiving body (31) is provided with an arm (30) which penetrates a guide (20) and on which the supporting device (29) acts.

## Revendications

1. Véhicule automobile,
- comprenant un toit réglable (17), qui est intégré dans une ouverture de toit (16) d'une caisse (2) avec des parois latérales (3, 4) possédant des cadres de toit fixes (9, 10), et qui peut être déplacé entre une position de fermeture et une position d'ouverture (Ost),
- le toit (17) présentant au moins dans une région arrière (11) de la caisse (2) plusieurs éléments de toit (25, 26, 27) disposés dans des guides (19, 20) des cadres de toit (9, 10) et réalisés au moins en partie de manière plate,
- un dispositif à éléments de toit (21) constitué par des éléments de toit (25, 26, 27) étant disposé au moins en partie dans les parois latérales (3, 4) formant un hayon arrière (24),
- le dispositif à éléments de toit (21) pouvant être déplacé d'une position d'ouverture (Ost) dans une position de vision arrière (Rbst) et vice versa,
- au moins l'un des éléments de toit (25, 26, 27) du dispositif à éléments de toit (21) pour permettre la vision derrière le véhicule automobile (1) au-delà d'un habitacle de conduite (28) se composant d'un matériau transparent, de préférence de verre, et
- le toit réglable (17) étant réalisé en partie en tant que toit pliant (Fd) coopérant avec le dispositif à éléments de toit (21), avec un revêtement de capote, des arceaux de guidage et des arceaux de pliage.

2. Véhicule automobile selon la revendication 1, **caractérisé en ce que** le dispositif à éléments de toit (21), vu dans le sens inverse de la direction de conduite (D), comprend un premier élément de toit (25), un deuxième élément de toit (26) et un troisième élément de toit (27).

3. Véhicule automobile selon la revendication 2, **caractérisé en ce qu'**au moins l'un des deuxième et troisième éléments de toit (26 et 27) du dispositif à éléments de toit (21) se compose au moins en partie de verre.

4. Véhicule automobile selon la revendication 3, **caractérisé en ce que** le deuxième élément de toit (26) et le troisième élément de toit (27) se composent de verre.

5. Véhicule automobile selon l'une quelconque ou plusieurs des revendications 2 à 4, **caractérisé en ce que**, vu dans la direction longitudinale du véhicule (C-C), le deuxième et le troisième élément de toit (26 et 27) présentent approximativement des longueurs identiques.

6. Véhicule automobile selon l'une quelconque ou plusieurs des revendications 2 à 4, **caractérisé en ce que**, vu dans la direction longitudinale du véhicule (C-C), le deuxième élément de toit (26) et le troisième élément de toit (27) présentent des longueurs différentes (LI ≠ LII).

7. Véhicule automobile selon la revendication 6, **caractérisé en ce qu'**une première longueur (LI) du deuxième élément de toit (26) est supérieure à une deuxième longueur (LII) du troisième élément de toit (27).

8. Véhicule automobile selon la revendication 2, **caractérisé en ce que** le premier élément de toit (25) du dispositif à éléments de toit (21) est fixé dans la position de vision arrière (Rbst) à l'encontre de l'action d'un dispositif de support (29).

9. Véhicule automobile selon la revendication 8, **caractérisé en ce que** le dispositif de support est formé par une unité cylindre-piston (33).

10. Véhicule automobile selon la revendication 9, **caractérisé en ce que** l'unité cylindre-piston (33) est formée par un ressort à gaz sous pression, un ressort à gaz de traction ou similaire.

11. Véhicule automobile selon la revendication 2, **caractérisé en ce que** dans la position d'ouverture (Ost), le toit pliant (Fd) recouvre avec des portions repliables individuelles (18) au moins en partie le deuxième élément de toit (26) et le troisième élément de toit (27), tandis que lesdites portions repliables du toit pliant (Fd) se situent, dans la position de vision arrière (Rbst), en dehors du deuxième et du troisième élément de toit (26 et 27).

12. Véhicule automobile selon la revendication 1, **caractérisé en ce que** la position de vision arrière (Rbst) du dispositif à éléments de toit (21) peut être commandée en fonction d'une position de marche arrière (R) d'un dispositif de changement de vitesse (34) du véhicule automobile (1).

13. Véhicule automobile selon l'une quelconque des revendications 1 à 11, **caractérisé en ce que** la position de vision arrière (Rbst) du dispositif à éléments de toit (21) est commandée en fonction d'une position de marche arrière (R) d'un dispositif de changement de vitesse (34) du véhicule automobile (1) de telle sorte que lorsque la position d'ouverture du dispositif à éléments de toit (21) est ajustée, l'enclenchement de la vitesse de marche arrière commande automatiquement le réglage du dispositif à éléments de toit (21) dans sa position de vision arrière (Rbst).

14. Véhicule automobile selon la revendication 8, **caractérisé en ce que** le premier élément de toit (25) réalisé à la manière d'un arceau comprend, à chaque extrémité, un corps de réception (31) pour le dispositif de support (29).

15. Véhicule automobile selon la revendication 14, **caractérisé en ce que** le corps de réception (31) est pourvu d'un bras (30) traversant un guide (20), sur lequel vient en prise le dispositif de support (29).
